# EUROPEAN PATENT APPLICATION

(11) **EP 4 521 185 A1**
(43) Date of publication of application: **12.03.2025**
(21) Application number: 23814942.1
(22) Date of filing: 16.05.2023
(51) Int. Cl.: G05D 1/02

(54) **MAP AREA CONTOUR-BASED SETTING METHOD AND ROBOT EDGE END CONTROL METHOD**

(30) Priority: 30.05.2022 CN 202210596096
(71) Applicant: Amicro Semiconductor Co., Ltd., Hengqin New District, Zhuhai City Guangdong 519000 (CN)
(72) Inventor: LIANG, Yiheng, Zhuhai, Guangdong 519000 (CN); PAN, Jinjie, Zhuhai, Guangdong 519000 (CN)
(74) Representative: Penza, Giancarlo
(86) International application number: PCT/CN2023/094396
(87) International publication number: WO 2023/231757

(57) **Abstract**

A map region contour-based setting method and a method for controlling robot edgewise walking termination. The method for controlling robot edgewise walking termination includes: a robot setting a plurality of unit regions to be subjected to edgewise walking by executing a setting method; then, the robot performing edgewise walking in a working region (S302); when the robot walks through all unit regions to be subjected to edgewise walking, the robot stopping walking along the edge (S306); and when the robot repeatedly walks through the same batch of unit regions to be subjected to edgewise walking, the robot stopping walking along the edge (S307), wherein the same batch of unit regions to be subjected to edgewise walking are a preset number of unit regions to be subjected to edgewise walking that are different from each other, and the number of unit regions to be subjected to edgewise walking set by using the setting method is greater than the preset number.

## Description

### Technical Field

The present disclosure relates to the technical field of edgewise walking of a robot in an indoor region, and in particular to a map region contour-based setting method and a robot edgewise walking termination control method for controlling robot edgewise walking termination.

### Background

At present, a cleaning robot performs sweeping along wall surfaces of a room depending on location information collected by a visual technical means, and generally performs edgewise sweeping after performing global planned sweeping on room regions according to a historical map, so as to achieve the purpose of improving the sweeping coverage rate and cleaning garbage in dead corners in the room. Due to diverse room wall layouts and furniture placements in different households, it is easy to create complex robot sweeping environments, meanwhile during the process of the robot walking along walls, a cumulative error of a sensor becomes greater and greater, therefore untimely or wrong judgment is usually caused when it is judged whether the cleaning robot should terminate edgewise sweeping by using traditional methods (edgewise sweeping has been performed on counter lines of the room for a circle), for example, the difference between a rotation angle recorded by the robot at the current location and a rotation angle recorded at a starting point of edgewise walking is a positive integer multiple of 360 degrees, at this time, the cleaning robot continues to walk along the edge in the same local region, resulting in repeated sweeping of the cleaning robot, thereby reducing the working efficiency of the cleaning robot.

### Summary

The present disclosure discloses a map region contour-based setting method and a method for controlling robot edgewise walking termination. The specific technical solution is as follows: based on the map region contour-based setting method, before the setting method is executed, a robot acquires a map of a working region, wherein the map is used for representing a contour of the working region, so that the robot walks along the contour; the setting method includes: searching for corner points of the working region from the map the robot; and then setting, by the robot, rectangular regions, wherein two adjacent corner points are located in each of the rectangular regions as a unit region to be subjected to edgewise walking, the two adjacent corner points are covered by the unit region to be subjected to edgewise walking where the two adjacent corner points are located; and in the map, a contour consistent with an extension direction of the two adjacent corner points covered by each unit region to be subjected to edgewise walking is expressed by using the unit region to be subjected to edgewise walking or the two adjacent corner points covered by each unit region to be subjected to edgewise walking. The present technical solution has the beneficial technical effects that the contour of the working region is first represented by the rectangular region corresponding to two adjacent corner points in a preset clock direction or two corner points, so that the robot can identify the edgewise walking condition of the robot by judging whether an edgewise walking trajectory passes through the rectangular region corresponding to two corresponding corner points, and then the robot determines whether to stop continuing to walk along the edge by judging whether the edgewise walking trajectory of the robot has sequentially covered a map contour segment corresponding to the entire working region according to the preset clock direction. Therefore, not only can the edgewise walking contour segment of the robot in the working region be conveniently judged, but it is also accurately judged whether to terminate the edgewise walking mode, thereby avoiding the robot repeatedly traversing a local region or terminating the edgewise walking in advance due to misjudgment, and thus improving the working efficiency of the robot in the working region.

The method for controlling robot edgewise walking termination includes: executing a map region contour-based setting method by a robot to set a plurality of unit regions to be subjected to edgewise walking; then, performing edgewise walking in a working region by the robot; when the robot walks through all the unit regions to be subjected to edgewise walking, stopping perform edgewise walking by the robot; and when the robot repeatedly walks through a same batch of the unit regions to be subjected to edgewise walking, stopping perform edgewise walking by the robot, wherein the same batch of the unit regions to be subjected to edgewise walking are a preset number of the unit regions to be subjected to edgewise walking that are different from each other, and the number of unit regions to be subjected to edgewise walking set by using the setting method is greater than a preset number. The present technical solution has the beneficial technical effects that in the case of an abnormal situation in which a part of passable region of the working region is blocked by an obstacle or a working forbidden region is defined by a virtual wall, the robot cannot smoothly perform complete edgewise walking in the working region, at this time, just by means of judging that the robot repeatedly walks through a certain number of rectangular regions for multiple times and does not wander in the same rectangular region every time, it can be determined that the robot has an anomaly during the edgewise walking process, so that the robot can stop walking along the edge in time, so as to ensure the working efficiency.

### Brief Description of the Drawings

Fig. 1 is a schematic diagram of corner points of a working region and a unit region to be subjected to edgewise walking (a rectangular region surrounding two adjacent corner points) where the corner points are located disclosed in one embodiment of the present disclosure.
Fig. 2 is a schematic diagram of an edgewise walking trajectory formed by a robot in the working region and unit regions to be subjected to edgewise walking through which the robot passes in a scenario in which an indoor region is blocked by a virtual wall or an obstacle disclosed in another embodiment of the present disclosure.
Fig. 3 is a flowchart of a method for controlling robot edgewise walking termination disclosed in still another embodiment of the present disclosure.

### Detailed Description of the Embodiments

The technical solutions in the embodiments of the present disclosure will be described below in detail in combination with the drawings in the embodiments of the present disclosure. To further illustrate the embodiments, the present disclosure provides the drawings. These drawings are part of disclosure of the present disclosure, which are mainly used to illustrate the embodiments and explain the operation principles of the embodiments in conjunction with relevant descriptions of the specification. Those ordinary skilled in the art should understand other possible implementations and advantages of the present disclosure with reference to these contents. The processing or methods are depicted as flowcharts. Although the steps are described as being sequentially processed in the flowcharts, many of the steps therein may be implemented in parallel, concurrently, or simultaneously. In addition, the sequence of the steps may be rearranged. The processing may be terminated when the operation thereof is completed, but may also include additional steps that are not included in the drawings. The processing may correspond to a method, a function, a procedure, a sub-routine, a sub-program, etc.

Generally, edgewise walking of a robot is that the robot looks for a wall body from any location in a room, wherein the wall body herein may be regarded as a contour of the room; when the robot detects the wall body, the advancing direction of the robot is adjusted to be parallel to a wall surface, wherein the wall body may be split into two appropriately parallel wall surfaces, and a contour or contour line or contour line segment of the room may be regarded as a projection line of the wall surface on a horizontal ground; then, the location where the wall body is detected is recorded as an edgewise walking starting point, coordinates of the robot and an advancing angle (an angle of the advancing direction of the robot relative to an X-axis direction or an angle of the advancing direction of the robot relative to a Y-axis direction) of the robot at this time are recorded in a map constructed in real time, and then the robot performs edgewise walking parallel to the wall surface along this edgewise walking starting point (walking along the contour of the room), wherein the advancing direction of the robot is adjusted to be parallel to an extension direction of the wall surface, that is, the advancing direction of the robot is parallel to the extension direction of the contour of the wall body, so as to form a posture that the robot should keep during edgewise walking; and in an embodiment in which the robot is a cleaning robot, the cleaning robot has a global edgewise walking mode, that is, the cleaning robot walks along the contour line of the whole terrain, and the advancing direction of the cleaning robot is adjusted to be parallel to the contour line of the whole terrain. The cleaning robot performs global edgewise walking in an indoor working region, for example, walks along the contour line of the wall body, and the advancing direction of the cleaning robot is parallel to the contour line of the wall body. At this time, the robot is in an edgewise walking working mode, and the robot marks each location point through which the robot walks during the edgewise walking in the working mode in an instantly constructed map, so that a historical map in the room can be constructed before a map region contour-based setting method and a method for controlling robot edgewise walking termination disclosed in the present disclosure are executed.

As an embodiment, a map region contour-based setting method is disclosed to simplify the mode for setting the contour of a map region in the prior art, an executive body of the setting method is a robot and is a robot in which a historical map is stored, which may be understood as a controller capable of running program codes set inside the robot, and the contour of the map region is used for describing the contour of a working region in the map, which is suitable for a robot which prepares for performing edgewise walking, and particularly a robot which prepares for performing edgewise walking in the working region; and the robot walks through the working region in advance and has constructed local maps of various sub-regions in the working region, the local maps are combined into a global map, which is a historical map of the working region with respect to the currently constructed map of the robot, and in the present embodiment, and the historical map is used for representing the contour of the working region, so that the robot walks along the corresponding contour.

Specifically, the setting method includes: the robot searching for corner points of the working region from a map, that is, searching for, from the historical map, corner points which have been determined in the working region, and forming a corner point map, wherein the search mode includes, but is not limited to, extracting all corner points from neighborhood pixel points via a corner point extraction algorithm, for example, if the gray value difference between one pixel point and a pixel point in the neighborhood is relatively large (being too bright or too dark), it is more likely to be a corner point; the search mode further includes a four-neighborhood-based graph search algorithm or an eight-neighborhood-based graph search algorithm, and the like; and then it is equivalent to that the robot searches for the corner points from the working region. After the robot acquires all corner points in the working region, the robot sets a rectangular region where two adjacent corner points are located and which has a specific geometric relationship as a unit region to be subjected to edgewise walking, specifically, the rectangular region where every two adjacent corner points are located and which has the specific geometric relationship is set as the unit region to be subjected to edgewise walking according to a preset clock direction, so that the robot divides a plurality of unit regions to be subjected to edgewise walking from the rectangular region according to the preset clock direction, wherein the preset clock direction may be regarded as a bypassing direction on which the robot depends for edgewise walking, and may be set to be parallel to the extension direction of the contour of the working region, and the preset clock direction is a clockwise direction or a counterclockwise direction and corresponds to an edgewise sweeping direction in an edgewise sweeping mode of a cleaning robot; and the two adjacent corner points are covered by the unit region to be subjected to edgewise walking where the two adjacent corner points are located.

It should be noted that, the robot may sequentially store the corner points and/or the unit regions to be subjected to edgewise walking in a linear storage space according to a collection sequence of the preset clock direction, so that the robot extracts the corresponding corner points or the unit regions to be subjected to edgewise walking during the process of performing edgewise walking according to the preset clock direction, wherein by sorting pairs of two adjacent corner points and the unit regions to be subjected to edgewise walking where the pairs of two adjacent corner points are located in the preset clock direction, the sequence of regional locations through which the robot traverses or passes can be simplified.

On this basis, in the present embodiment, the robot controls to represent a contour that is consistent with the extension direction of two adjacent corner points covered by each unit region to be subjected to edgewise walking by using the unit region to be subjected to edgewise walking or the two adjacent corner points covered by the unit region to be subjected to edgewise walking, and specifically controls to represent a contour segment that is consistent with the extension direction, in the preset clock direction, of the two adjacent corner points covered by the unit region to be subjected to edgewise walking by using the unit region to be subjected to edgewise walking or the two adjacent corner points covered by the unit region to be subjected to edgewise walking, so as achieve the effect of simplifying the contour of the working region. Therefore, in the present embodiment, the contour of the working region is represented by the rectangular region corresponding to two adjacent corner points in the preset clock direction or the two corner points, so that the robot can identify the edgewise walking condition of the robot by judging whether the edgewise walking trajectory passes through the rectangular region corresponding to the two corresponding corner points.

It should be noted that the working region is a region to be cleaned, which may be a separate room unit in a household space, the region to be cleaned is a partial region in one room unit, or the region to be cleaned is a room region composed of a plurality of room units, or the region to be cleaned is the household space. The region to be cleaned may also be a public place such as an office in an office building, a shopping mall or an airport. In the embodiments of the present application, the working region is not specifically limited.

In the working region, the robot collects location information in an environment by using a vision sensor (a camera or a depth camera) installed on a machine body, converts the collected location information into pixel points, and configures the pixel points in a grid map composed of unit cells one by one, wherein each unit cell correspondingly represents one pixel point and is configured with corresponding map coordinates, and a map coordinate system is different from a sensor coordinate system, but is also configured with an origin, a Y axis and an X axis.

As an embodiment, the method for the robot to set the rectangular region where the two adjacent corner points are located as the unit region to be subjected to edgewise walking includes: when there are equal coordinate values of one dimension in the two adjacent corner points, a line segment parallel to a connecting line of the two adjacent corner points is selected as a long edge of the rectangular region, and the length of the long edge of the rectangular region is set to be a first preset multiple of a linear distance between the two adjacent corner points, so as to construct the rectangular region, preferably, the length of a short edge of the rectangular region is associated with a body width of the robot or the thickness of a wall body, so that the robot can pass through. The specific construction mode of the rectangular region is: when abscissa values of the two adjacent corner points are equal or when ordinate values of the two corner points are equal, the line segment parallel to the connecting line of the two adjacent corner points is selected as the long edge of the rectangular region, the length of the long edge of the rectangular region is set to be the first preset multiple of the linear distance between the two adjacent corner points, the length of the short edge of the rectangular region is set to be greater than the body width of the robot or the thickness of the wall body, and the rectangular region is set to cover only two corner points, wherein the two corner points are the two adjacent corner points; and then, the rectangular region is set as the unit region to be subjected to edgewise walking, wherein the first preset multiple is greater than or equal to 1, and the length of the long edge (which generally belongs to edges in a width direction of the rectangular region) of the rectangular region is greater than or equal to the length of the short edge (which generally belongs to edges in a height direction of the rectangular region) of the rectangular region. In some embodiments, there may be a relatively large overlapping region between two unit regions to be subjected to edgewise walking (which may be regarded as two unit regions to be subjected to edgewise walking adjacent to each other in locations) set in the preset clock direction, but the representation of contour lines in the map is not affected, and no influence is generated on the robot to perform edgewise walking according to the unit regions to be subjected to edgewise walking and the corner points covered thereby. Repetition is performed in this way to set the rectangular region where every two adjacent corner points are located as the unit region to be subjected to edgewise walking. Specifically, the rectangular region where every two adjacent corner points are located is set as the unit region to be subjected to edgewise walking in the preset clock direction, until all corner points in the working region are set. It may be implemented that each unit region to be subjected to edgewise walking is not completely overlapped.

It should be noted that, when there are equal coordinate values of one dimension in the two adjacent corner points, the long edge of the rectangular region includes two endpoints, the long edge of the rectangular region may be regarded as being formed by connecting the two endpoints, the two endpoints are separately located on the outer sides of the two adjacent corner points, and one of the two endpoints extends towards the other endpoint in a direction parallel to the connecting line of the two adjacent corner points, so as to obtain the long edge of the rectangular region, wherein the length of a connecting line of the two endpoints is equal to the first preset multiple of the linear distance between the two adjacent corner points, and a projection line segment of the connecting line of the two adjacent corner points on the connecting line of the two endpoints does not exceed the connecting line of the two endpoints; in the present embodiment, two corner points are covered by the rectangular region, and the two adjacent corner points are the two corner points uniquely covered by the rectangular region; in some implementations, the long edge of the rectangular region may extend from a left side of one of the two adjacent corner points towards a right side thereof, and the long edge of the rectangular region may also extend from the right side of one of the two adjacent corner points towards the left side thereof; and the two long edges of the rectangular region may both extend in the same direction or in opposite directions respectively, wherein the two long edges of the rectangular region are respectively located on the two sides of the connecting line of the two adjacent corner points, so that the connecting line of the two adjacent corner points is surrounded in the rectangular region by combining two short edges perpendicular to the long edge of the rectangular region.

It should be noted that, when there are equal coordinate values of one dimension in the two adjacent corner points, there is an intermediate point on a vertical line of the connecting line of the two adjacent corner points, the intermediate point may be located on an upper side, a lower side, a left side or a right side of the connecting line of the two adjacent corner points, and the intermediate point respectively extends towards the two sides of the intermediate point in the direction parallel to the connecting line of the two adjacent corner points, so as to obtain the long edge of the rectangular region, wherein the sum of extension lengths on the two sides of the intermediate point is equal to the first preset multiple of the linear distance between the two adjacent corner points, that is, equal to the length of the long edge of the rectangular region, and a projection line segment of the connecting line of the two adjacent corner points on the long edge of the rectangular region does not exceed the long edge of the rectangular region; in some implementations, the long edge of the rectangular region may extend from the intermediate point to the left side of the intermediate point and the right side of the intermediate point, respectively; in some embodiments, a first intermediate point is set vertically above the connecting line of the two adjacent corner points, a second intermediate point is set vertically below the connecting line of the two adjacent corner points, the long edge of the rectangular region includes a first long edge and a second long edge, the first long edge is located on the upper side of the connecting line of the two adjacent corner points, and the second long edge is located on the lower side of the connecting line of the two adjacent corner points; the first intermediate point respectively extends towards the two sides of the first intermediate point in the direction parallel to the connecting line of the two adjacent corner points, so as to obtain the first long edge of the rectangular region; and meanwhile, the second intermediate point respectively extends towards the two sides of the second intermediate point in the direction parallel to the connecting line of the two adjacent corner points, so as to obtain the second long edge of the rectangular region, wherein the distance between the first long edge and the second long edge of the rectangular region is equal to the length of the short edge of the rectangular region, so that the connecting line of the two adjacent corner points is surrounded in the rectangular region by combining the two short edges perpendicular to the long edge of the rectangular region.

In some embodiments, when there are equal coordinate values of one dimension in the two adjacent corner points, the connecting line of the two adjacent corner points is selected as the long edge of the rectangular region, so that the length of the long edge of the rectangular region is equal to the linear distance between the two adjacent corner points, so as to construct the rectangular region, and then the rectangular region is set as the unit region to be subjected to edgewise walking, wherein two corner points are covered by the rectangular region, the two corner points are the two adjacent corner points, and then the two adjacent corner points are the two corner points uniquely covered by the rectangular region, so that different unit regions to be subjected to edgewise walking do not completely overlap with each other. For example, in two closest corner points in the preset clock direction, when the abscissa values of the two corner points are equal or when the ordinate values of the two corner points are equal, the connecting line of the two adjacent corner points is selected as the long edge of the rectangular region, so that the length of the rectangular region is equal to the linear distance between the two adjacent corner points, the length of the short edge of the rectangular region is set to be greater than or equal to the body width of the robot, the two corner points uniquely covered by the rectangular region are set as the two adjacent corner points, and then the rectangular region is marked as the unit region to be subjected to edgewise walking. Therefore, the representation form of the contour of the working region is further simplified.

As an embodiment, the method for the robot to set the rectangular region where the two adjacent corner points are located as the unit region to be subjected to edgewise walking includes: when the coordinate values of the same dimension (the abscissa values are unequal and the ordinate values are unequal) in the two adjacent corner points are unequal, a line segment parallel to the connecting line of the two adjacent corner points is selected as a diagonal line of the rectangular region, and the length of the diagonal line is set to be a second preset multiple of the linear distance between the two adjacent corner points, so as to construct the rectangular region, wherein only two corner points are covered by the rectangular region, the two adjacent corner points are the two corner points uniquely covered by the rectangular region, preferably, the length of the short edge of the rectangular region is associated with the body width of the robot or the thickness of the wall body, so that the robot can pass through. The specific construction mode of the rectangular region is: in two closest corner points in the preset clock direction, when the abscissa values of the two corner points are unequal and the ordinate values of the two corner points are unequal, the line segment parallel to the connecting line of the two adjacent corner points or a line segment intersecting with the connecting line of the two adjacent corner points is selected as the diagonal line of the rectangular region, the length of the diagonal line is set to be the second preset multiple of the linear distance between the two adjacent corner points, and the length of the short edge of the rectangular region is set to be greater than the body width of the robot or the thickness of the wall body, the two corner points uniquely covered by the rectangular region are set as the two adjacent corner points, and then the rectangular region is set as the unit region to be subjected to edgewise walking, wherein the second preset multiple is greater than 1, and the length of the long edge (which generally belongs to edges in the width direction of the rectangular region) of the rectangular region is greater than or equal to the length of the short edge (which generally belongs to edges in the height direction of the rectangular region) of the rectangular region. In some embodiments, the second preset multiple may be equal to the first preset multiple, there may be a relatively large overlapping region between two unit regions to be subjected to edgewise walking set in the preset clock direction, but the representation of contour lines in the map is not affected, and no influence is generated on the robot to perform edgewise walking according to the unit regions to be subjected to edgewise walking and the corner points covered thereby. Repetition is performed in this way to set the rectangular region where every two adjacent corner points are located as the unit region to be subjected to edgewise walking. Specifically, the rectangular region where every two adjacent corner points are located is set as the unit region to be subjected to edgewise walking in the preset clock direction, until all corner points in the working region are set. It may be implemented that each unit region to be subjected to edgewise walking is not completely overlapped.

It should be noted that, when the coordinate values of the same dimension in the two adjacent corner points are unequal, the diagonal line of the rectangular region includes two endpoints, the diagonal line of the rectangular region may be regarded as being formed by connecting the two endpoints, the two endpoints are separately located on the outer sides of the two adjacent corner points, and one of the two endpoints extends towards the other endpoint in the direction parallel to the connecting line of the two adjacent corner points or a direction intersecting with the connecting line of the two adjacent corner points, so as to obtain the diagonal line of the rectangular region, wherein the length of a connecting line of the two endpoints is equal to the second preset multiple of the linear distance between the two adjacent corner points, and a projection line segment of the connecting line of the two adjacent corner points on the connecting line of the two endpoints does not exceed the connecting line of the two endpoints, wherein two corner points are covered by the rectangular region, and the two adjacent corner points are the two corner points uniquely covered by the rectangular region; in some implementations, the diagonal line of the rectangular region may extend from the lower left of one of the two adjacent corner points to the top right thereof, and the diagonal line of the rectangular region may also extend from the top right of one of the two adjacent corner points to the lower left thereof; and an included angle formed by two diagonal lines of the rectangular region is not equal to an integer multiple of 0 degree or 180 degrees.

It should be noted that, when the coordinate values of the same dimension in the two adjacent corner points are unequal, there is an intermediate point on the vertical line of the connecting line of the two adjacent corner points, the intermediate point may be located on the upper side, the lower side, the left side or the right side of the connecting line of the two adjacent corner points, and the intermediate point respectively extends towards the two sides of the intermediate point in the direction parallel to the connecting line of the two adjacent corner points or the direction intersecting with the connecting line of the two adjacent corner points, so as to obtain the diagonal line of the rectangular region, wherein the sum of extension lengths on the two sides of the intermediate point is equal to the second preset multiple of the linear distance between the two adjacent corner points, that is, equal to the length of the diagonal line of the rectangular region, and a projection line segment of the connecting line of the two adjacent corner points on the diagonal line of the rectangular region does not exceed the diagonal line of the rectangular region, wherein two corner points are covered by the rectangular region, and the two adjacent corner points are the two corner points uniquely covered by the rectangular region; and in some implementations, the diagonal line of the rectangular region may extend from the intermediate point towards the lower left of the intermediate point and the top right of the intermediate point, respectively. In some embodiments, a first intermediate point is set vertically above the connecting line of the two adjacent corner points, a second intermediate point is set vertically below the connecting line of the two adjacent corner points, the long edge of the rectangular region includes a first diagonal line and a second diagonal line, the second diagonal line intersects with the connecting line of the two adjacent corner points, and the first diagonal line may be parallel to the connecting line of the two adjacent corner points; the first intermediate point respectively extends towards the two sides of the first intermediate point in the direction parallel to the connecting line of the two adjacent corner points, so as to obtain the first diagonal line of the rectangular region; and meanwhile, the second intermediate point respectively extends towards the two sides of the second intermediate point in the direction intersecting with the connecting line of the two adjacent corner points, so as to obtain the second diagonal line of the rectangular region, wherein the distance between the first diagonal line and the second diagonal line of the rectangular region is equal to the length of the diagonal line of the rectangular region, and the first diagonal line intersects with the second diagonal line at one point, an included angle formed by the first diagonal line and the second diagonal line is not equal to an integer multiple of 0 degree or 180 degrees, and the first diagonal line and the second diagonal line are set in a central symmetry manner with respect to the point, so as to surround the two adjacent corner points in combination with the rectangular region.

In some embodiments, when the coordinate values of the same dimension in the two adjacent corner points are unequal, a line segment of the connecting line of the two adjacent corner points is selected as the diagonal line of the rectangular region, so as to construct the rectangular region, and then the rectangular region is set as the unit region to be subjected to edgewise walking, wherein two corner points are covered by the rectangular region, the two corner points are the two adjacent corner points, and then the two adjacent corner points are the two corner points uniquely covered by the rectangular region. For example, in two closest corner points in the preset clock direction, when the abscissa values of the two corner points are unequal and the ordinate values of the two corner points are unequal, a line segment of the connecting line of the two adjacent corner points is selected as the diagonal line of the rectangular region, and the length of the diagonal line of the rectangular region is set to be greater than or equal to the body width of the robot or the thickness of the wall body, wherein the length of the diagonal line of the rectangular region is greater than the length of the short edge of the rectangular region; and the two corner points uniquely covered by the rectangular region are set as the two adjacent corner points, and then the rectangular region is marked as the unit region to be subjected to edgewise walking. Therefore, the representation form of the contour of the working region is further simplified.

In the foregoing embodiments, the length of the long edge (which generally belongs to edges in the width direction of the rectangular region) of the rectangular region is greater than or equal to the length of the short edge (which generally belongs to edges in the height direction of the rectangular region) of the rectangular region. The minimum edge length of the unit region to be subjected to edgewise walking is greater than or equal to the body width of the robot, or greater than or equal to the thickness of the wall body of the working region, so as to reserve a space for the robot to enter the unit region to be subjected to edgewise walking. Therefore, the rectangular region constructed by a pair of two adjacent corner points better conforms to the walking habits of the robot, and the robot sets an empirical width value (the length of the long edge) and an empirical height value (the length of the short edge) of the rectangular region according to a relative location relationship between the pair of adjacent corner points, so as to ensure that the extracted unit region to be subjected to edgewise walking can allow the robot to walk, thus the walking trajectory of the robot passes through.

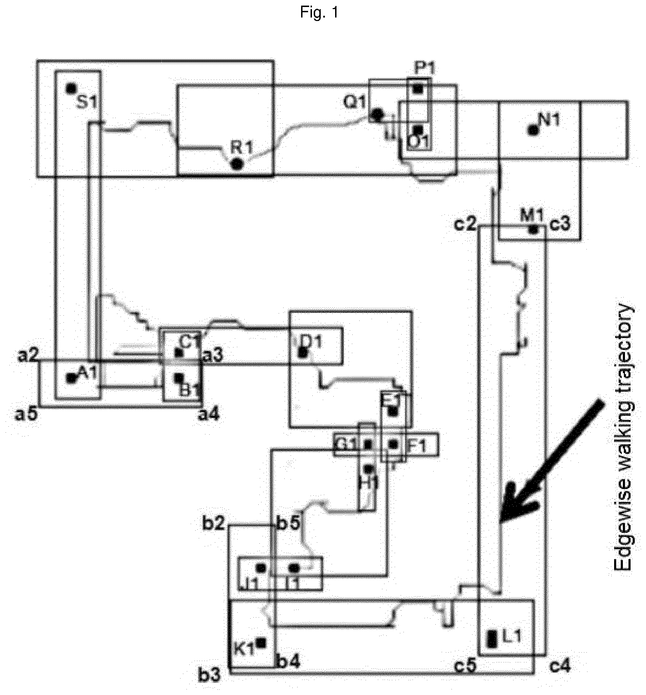

As an embodiment, it can be seen from Fig. 1 that, in the working region where the robot is located, the robot walks along the contour of the working region in a counterclockwise direction, that is, walks along the edge starting from a corner point A1, so as to correspondingly form an edgewise walking trajectory shown in the figure. In Fig. 1, starting from the corner point A1, the robot sequentially constructs each rectangle in the counterclockwise direction, the rectangle is correspondingly the unit region to be subjected to edgewise walking, and in the map, the corner points searched in the counterclockwise direction are sequentially the corner point A1, a corner point B1, a corner point C1, a corner point D1, a corner point E1, a corner point F1, a corner point G1, a corner point H1, a corner point I1, a corner point J1, a corner point K1, a corner point L1, a corner point M1, a corner point N1, a corner point O1, a corner point P1, a corner point Q1, a corner point R1 and a corner point S1, wherein the robot may start to walk along the edge on a path that extends counterclockwise from the corner point A1 to the corner point B1, and seen from the counterclockwise direction, when the corner point A1 is the first searched corner point, the last searched corner point may be the corner point S1. In the present embodiment, the horizontal direction in Fig. 1 is set as an abscissa axis direction, and the vertical direction in Fig. 1 is set as an ordinate axis direction. The counterclockwise direction herein is an edgewise walking direction set relative to the contour of the working region, so that the robot walks along the contour of the working region in the counterclockwise direction.

As one construction mode of the unit region to be subjected to edgewise walking, for a pair of two adjacent corner points, for example, the corner point A1 and the corner point B1, the ordinate value of the corner point A1 is equal to the ordinate value of the corner point B1, and the abscissa value of the corner point A1 is not equal to the abscissa value of the corner point B1, then line segments parallel to a connecting line of the corner point A1 and the corner point B1 are selected as long edges of a rectangular region, specifically the selected long edges of the rectangular region in Fig. 1 are respectively a line segment a2a3 above the connecting line of the corner point A1 and the corner point B1, and a line segment a4a5 below the connecting line of the corner point A1 and the corner point B1, the length of the line segment a2a3 is set to be greater than or equal to the length of the connecting line of the corner point A1 and the corner point B1, meanwhile the length of the line segment a4a5 is set to be equal to the length of the line segment a2a3, the line segment a2a3 is obtained by a point a2 extending towards a point a3 in a direction parallel to the connecting line of the corner point A1 and the corner point B1 (extending from left to right), the line segment a4a5 may be formed by a point a4 extending towards a point a5 in the direction parallel to the connecting line of the corner point A1 and the corner point B1 (extending from right to left), and then a line segment a2a5 is connected with a line segment a3a4 to construct a rectangular region a2a3a4a5, that is, the unit region to be subjected to edgewise walking, the length of the short edge of the rectangular region is associated with the body width of the robot or the thickness of the wall body, the line segment a2a5 and the line segment a3a4 serve as the short edges of the rectangular region, which are perpendicular to the long edges of the rectangular region, so that the rectangular region a2a3a4a5 frames the corner point A1 and the corner point B1. On this basis, according to the construction mode, pairs of two adjacent corner points required for constructing the unit region to be subjected to edgewise walking in the counterclockwise direction are sequentially the corner point A1 and the corner point B1, the corner point C1 and the corner point D1, the corner point F1 and the corner point G1, the corner point I1 and the corner point J1, the corner point K1 and the corner point L1, and the corner point N1 and the corner point O1.

As another construction mode of the unit region to be subjected to edgewise walking, for a pair of two adjacent corner points, for example, the corner point J1 and the corner point K1, the abscissa value of the corner point J1 is equal to the abscissa value of the corner point K1, and the ordinate value of the corner point J1 is not equal to the ordinate value of the corner point K1, then line segments parallel to a connecting line of the corner point J1 and the corner point K1 are selected as long edges of a rectangular region, the long edges are correspondingly a line segment b2b3 and a line segment b4b5 in Fig. 1, the line segment b2b3 and the line segment b4b5 are separately located on two left and right sides of the connecting line of the corner point J1 and the corner point K1, the length of the line segment b2b3 is set to be greater than the length of a connecting line of the corner point E1 and the corner point F1, meanwhile the length of the line segment b4b5 is set to be equal to the length of the line segment b2b3, the line segment b2b3 is obtained by a point b2 extending towards a point b3 in a direction parallel to the connecting line of the corner point J1 and the corner point K1 (extending from top to bottom), the line segment b4b5 may be formed by a point b4 extending towards a point b5 in the direction parallel to the connecting line of the corner point J1 and the corner point K1 (extending from bottom to top), and then a line segment b2b5 is connected with a line segment b3b4 to construct a rectangular region b2b3b4b5, that is, the unit region to be subjected to edgewise walking, the length of the short edge of the rectangular region is associated with the body width of the robot or the thickness of the wall body, the rectangular region frames the corner point J1 and the corner point K1, and the length of the connecting line of the corner point J1 and the corner point K1 is greater than the length of the short edge of the rectangle where the same is located, wherein the line segment b2b5 and the line segment b3b4 serve as the short edges of the rectangular region b2b3b4b5. On this basis, according to the construction mode, pairs of two adjacent corner points required for constructing the unit region to be subjected to edgewise walking in the counterclockwise direction are sequentially the corner point B1 and the corner point C1, the corner point E1 and the corner point F1, the corner point G1 and the corner point H1, the corner point J1 and the corner point K1, the corner point M1 and the corner point N1, the corner point O1 and the corner point P1, and the corner point S1 and the corner point A1.

As still another construction mode of the unit region to be subjected to edgewise walking, for a pair of two adjacent corner points, for example, the corner point L1 and the corner point M1, the abscissa value of the corner point L1 is not equal to the abscissa value of the corner point M1, and the ordinate value of the corner point L1 is not equal to the ordinate value of the corner point M1, then a line segment parallel to a connecting line of the corner point L1 and the corner point M1 is selected as a diagonal line of a rectangular region, the diagonal line is correspondingly a connecting line of a point c3 and a point c5 in Fig. 1, the connecting line of the point c3 and the point c5 is parallel to a connecting line of the corner point D1 and the corner point E1, the length of a line segment c3c5 is set to be greater than the length of the connecting line of the corner point L1 and the corner point M1, and the line segment c3c5 is formed by the point c3 extending towards the point c5 in a direction parallel to the connecting line of the corner point L1 and the corner point M1 (extending from top right to lower left); meanwhile, another diagonal line is set in a direction intersecting with the connecting line of the point c3 and the point c5, the other diagonal line is specifically a line segment extending from a point c2 to a point c4, and the length of a line segment c2c4 is set to be greater than the length of the connecting line of the corner point L1 and the corner point M1; and then, the point c2 and the point c3, the point c3 and the point c4, the point c4 and the point c5, and the point c5 and the point c2 are sequentially connected end to end to construct a rectangular region c2c3c4c5, that is, the unit region to be subjected to edgewise walking, the length of the short edge of the rectangular region is greater than or equal to the body width of the robot or the thickness of the wall body, the rectangular region frames the corner point L1 and the corner point M1, wherein a line segment c2c3 and a line segment c4c5 serve as the short edges of the rectangular region c2c3c4c5. On this basis, according to the construction mode, pairs of two adjacent corner points required for constructing the unit region to be subjected to edgewise walking in the counterclockwise direction are sequentially the corner point D1 and the corner point E1, the corner point L1 and the corner point M1, the corner point H1 and the corner point I1, the corner point P1 and the corner point Q1, the corner point Q1 and the corner point R1, and the corner point R1 and the corner point S1.

In the above three construction modes of the unit region to be subjected to edgewise walking, the robot performs edgewise walking in the working region along the contour of the working region in the counterclockwise direction, the generated edgewise walking trajectory sequentially passes through each unit region to be subjected to edgewise walking, corresponding to Fig. 1, 19 unit regions to be subjected to edgewise walking are generated in total, and the number of constructed unit regions to be subjected to edgewise walking is equal to the number of corner points searched in the same working region. When the edgewise walking trajectory of the robot passes through the unit region to be subjected to edgewise walking, it is determined that the robot has walked along a contour segment consistent with the extension direction of the two adjacent corner points covered by the unit region to be subjected to edgewise walking, and specifically, it is determined that the robot has walked, according to the preset clock direction, along the contour segment consistent with the extension direction of the two adjacent corner points covered by the unit region to be subjected to edgewise walking in the preset clock direction. The contour of the working region is formed by connecting a plurality of contour segments, and each contour segment corresponds to two adjacent corner points.

In one implementation, when each contour segment is expressed in the map according to the preset clock direction by the unit region to be subjected to edgewise walking where the two corresponding adjacent corner points are located, a coordinate coverage range of the unit region to be subjected to edgewise walking in the working region and the sorting thereof in the preset clock direction are expressed in the map according to the preset clock direction, and then the coordinate coverage range of each unit region to be subjected to edgewise walking in the working region and the sorting of each region to be subjected to edgewise walking in the preset clock direction are sequentially recorded in a memory of the robot; and in another implementation, when each contour segment is expressed in the map by the two corresponding adjacent corner points, the coordinates of every two adjacent corner points in the working region and the sorting thereof in a first preset clock direction are sequentially expressed in the map according to the preset clock direction, so that contour information presented by the map is more refined. In the present embodiment, the coordinates of every two adjacent corner points in the working region and the sorting of every two adjacent corner points in the preset clock direction are further sequentially recorded in the memory of the robot, so as to conveniently identify the edgewise walking state subsequently. Therefore, the density of feature points for representing features points of an actual contour or corresponding regions is reduced.

Therefore, the robot may store the corner points searched in the map in a linear list according to the preset clock direction (a preset edgewise walking direction or an opposite direction (counterclockwise) thereof), and record the sorting of the corner points in the preset clock direction; in the counterclockwise direction, a rectangular region having a specific geometric relationship is divided from the region where every two adjacent corner points are located, and the sequence of the divided rectangular region is recorded in a linked list, and is recorded as the sorting of the rectangular region in the preset clock direction, so as to conveniently determine a relative location relationship of one unit region to be subjected to edgewise walking in the preset clock direction, and to conveniently determine the sorting of one pair of two adjacent corner points relative to a pre-selected first pair of two adjacent corner points, or to determine the sorting of one corner point relative to a pre-selected first corner point (a starting point for edgewise walking).

It should be noted that, the linear list includes two categories, that is, a linked list and a sequence list, a storage space occupied by the sequence list must be successive, the linked list does not have this requirement, the succession refers to the succession of the storage space, and in a sequential storage structure, a storage address of each data element in the linear list in a computer storage space is uniquely determined by a location sequence number of the element in the linear list. In this way, the sorting of corner points in the linear list is consistent with the sorting of the unit regions to be subjected to edgewise walking, so that the sorting can be conveniently mapped into the map to represent the extension direction of the contour of the working region in the preset clock direction.

It should be noted that, the contour segments and the contour of the working region formed by the contour segments essentially belong to contour lines required for the edgewise walking of the robot, but the contour of the working region or all contour segments are not necessarily completely undergo the edgewise walking of the robot. A contour formed by corresponding grids or pixel points in a pre-stored map (historical map) of the robot approaches the contour of an obstacle or a wall surface to the maximum extent. In some implementation scenarios, when the robot performs edgewise walking along a low obstacle, the distance between the robot and the low obstacle is relatively large to prevent the robot from pushing and colliding with the low obstacle, accordingly a contour line marked by the robot in the historical map is not necessarily in a predicted direction, the prediction is not absolutely correct, but at least represents an approximate edgewise walking direction, and is close to the contour of the obstacle or the wall surface as much as possible to form the preset clock direction. Preferably, the distance between the contour of the working region and the edgewise walking trajectory of the robot is greater than or equal to a body radius of the robot, so as to prevent the robot from frequently colliding with the obstacle or the wall surface during edgewise walking.

It should be supplemented that, the robot performs edgewise walking along the wall body of a room, for the convenience of description and understanding, in the map constructed by the robot, an actual outer wall of the wall body or an obstacle leaning against the wall are both regarded as overlooking projection lines of the wall body and the obstacle leaning against the wall on the ground (including a specific room ground) of an indoor working region. When there is a wall-side obstacle tightly close to the outer wall of the wall body, the surface of the wall-side obstacle that is not in contact with the outer wall of the wall body is regarded as the outer wall of the wall body when the robot advances. The edgewise walking control method disclosed in the present embodiment may be applicable to a multi-room case. Because when room doors are opened, the wall bodies of a plurality of rooms are successive, the robot advances along the wall bodies of the rooms, and the robot may periodically reciprocate and finally traverse the plurality of rooms.

On the basis of the above embodiments, during the process of setting the unit region to be subjected to edgewise walking in the working region, the robot firstly marks a pre-selected corner point as the current corner point, and starting from the current corner point, the robot selects one corner point closest to the current corner point in the preset clock direction and marks the corner point as the next corner point, wherein the closest corner point may come from four neighborhoods or eight neighborhoods of the current corner point, and is equivalent to a corner point closest to the current corner point during the process of extending in the preset clock direction; then, a rectangular region where the two corner points are located is set as the unit region to be subjected to edgewise walking, then the sorting and the coordinate coverage ranges of the unit region to be subjected to edgewise walking and the corresponding corner points in the preset clock direction are recorded, and the current corner point and the next corner point are marked as the two adjacent corner points; and then the next corner point is updated as the current corner point, and repetition is performed in this way until corresponding unit regions to be subjected to edgewise walking are set at locations where all corner points are located, that is, it may be determined that corresponding unit regions to be subjected to edgewise walking are set at the locations where all corner points are located, and the coordinate coverage ranges of all unit regions to be subjected to edgewise walking in the working region and the sorting in the first preset clock direction are obtained.

It should be noted that, when the working region is described by a grid map, the neighborhoods of a pixel point or a corner point mentioned in the present disclosure are upper, lower, left and right grid regions adjacent to a grid occupied by the pixel point or the corner point in the grid map, and are used for describing regions adjacent to the location of the pixel point or the corner point, so as to conveniently search for surrounding regions of the pixel point or the corner point.

As an embodiment, the method for the robot to search for the corner points of the working region from the map includes: in the map, starting from a preset search starting point, the robot obtains the corner points in a neighborhood search mode, wherein the search mode of the corner points includes eight-neighborhood search or four-neighborhood search, the corner point is an intersection point of a group of mutually perpendicular contour line segments in the map, the intersection point belongs to an endpoint of the contour line segment, and the search starting point is a pixel point used for representing an obstacle in the present embodiment. In some embodiments, the endpoint is a corner point of a wall surface of the room, and it is useful to construct a rectangular region in the working region. The contour line segment is marked by the robot in advance when performs traversal in the working region, a contour line segment of the obstacle or the wall surface (which may be regarded as a projection line segment of the obstacle or the wall surface on the horizontal ground) is directly represented by using two adjacent corner points, so that the contour of the room is simplified to a certain extent, and only the endpoint information is used to perform more judgment on the edgewise walking state of the robot. In the present embodiment, if starting from the preset search starting point, two pixel points, which are searched from front and back neighborhoods and are used for representing the obstacle, are not collinear with the search starting point, the search starting point is a corner point. Specifically, when only one pixel point for representing the obstacle is searched in the neighborhoods of the search starting point, the search starting point is set as a corner point, and the pixel point is marked as the current candidate point; a search is performed in the neighborhoods (which may be four neighborhoods or eight neighborhoods) of the current candidate point, if there is no pixel point collinear with the current candidate point and the search starting point, the current candidate point is marked as a corner point searched in the neighborhoods of the search starting point, and the search starting point and the current candidate point are marked as the two adjacent corner points; and if there is a pixel point collinear with the current candidate point and the search starting point, the current candidate point is updated as a transition point, the pixel point is updated as the current candidate point, then a search is performed in the neighborhoods of the current candidate point, repetition is performed in this way until there is no pixel point collinear with the current candidate point and the transition point, and the current candidate point is marked as a corner point, wherein the pixel point that has been marked as the search starting point is not allowed to be marked as the search starting point again, and the pixel point that has been marked as the transition point is not allowed to be marked as the search starting point again. Thus, a fine edge contour inside the working region is obtained.

As an embodiment, the method for the robot to search for the corner points of the working region from the map includes:
Step (1): first, any pixel point with a gray value of 1 is selected as a seed point, which is marked as Z1, a search is performed on eight neighborhoods or four neighborhoods thereof, if there is no pixel point with a value of 1 in the neighborhoods, the current neighborhood search is terminated, if there is only one pixel point with a value of 1 in the surrounding, the point is marked as Z2, and Z1 is marked as a corner point. Then, a search is performed in other neighborhoods of Z2, if there is no pixel point capable of being collinear with Z1 and Z2, Z2 is marked as a corner point. If there is a pixel point capable of being collinear with Z1 and Z2, the pixel point is marked as Z3, the point Z2 is marked as a transition point, then a neighborhood search is continued for Z3, and so on until no pixel point capable of being collinear with Zn-1 and Zn in the neighborhoods of Zn, then Zn is marked as a corner point, and a straight line segment formed by connecting Z1 and Zn constitutes a segment of wall surface.
Step (2), if there are two or more pixel points with gray values of 1 around the point Z1, it is discovered whether there are two points capable of being collinear with Z1. If not, Z1 is marked as a corner point and respectively extends towards each point, and the step (1) is repeated until arriving at another corner point. If there is a pair of pixel points with gray values of 1 being collinear with Z1, the point Z1 is marked as a transition point rather than a corner point, and Z1 respectively extends towards the two points, and the previous step is repeated until arriving at a corner point. If there is more than a pair of pixel points with gray values of 1 being collinear with Z1, the preceding steps are sequentially repeated on each pair of points.
Step (3), the next seed point is selected after one search is completed, wherein the seed points in the previous steps cannot be used as seed points again, and the transition points marked in the previous steps cannot be used as seed points again, until the judgment on all pixel points with gray values of 1 is completed, wherein the gray values of pixel points for representing the obstacle or the wall surface in the map are 1.

In summary, by using the corner points searched in the foregoing steps, it is more convenient to judge whether the edgewise walking trajectory of the robot may pass through the contour of the entire working region.

Based on the foregoing embodiments, the present disclosure further discloses a method for controlling robot edgewise walking termination, wherein the method for controlling robot edgewise walking termination is executed on the basis that the robot has traversed the working region and acquires the map of the working region, and the method for controlling robot edgewise walking termination is to determine whether to terminate an edgewise walking task in a predetermined edgewise walking direction in combination with corner point information in the historical map and the edgewise walking trajectory of the robot in the working region.

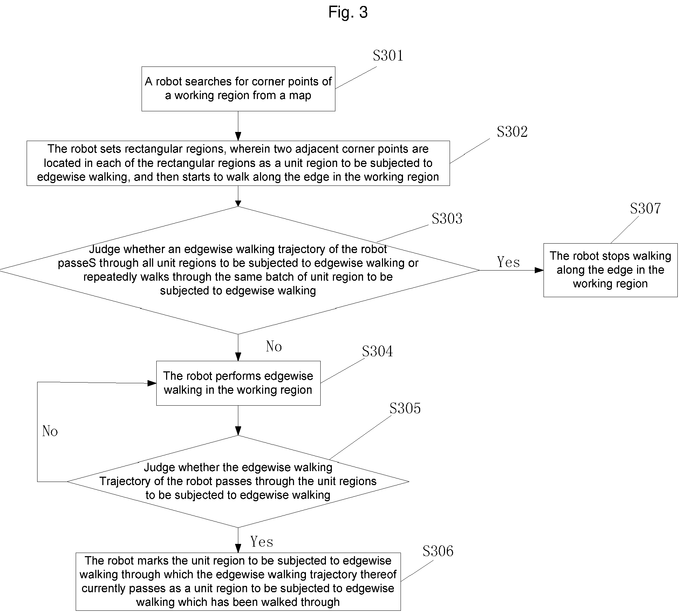

As shown in Fig. 3, the method for controlling robot edgewise walking termination includes:
Step S301, the robot searches for the corner points of the working region from the map, specifically, the robot searches for the corner points from the historical map (a previously constructed map about the working region), wherein the search range is located in a gap region for the working region, then it is equivalent that the robot searches for the corner points from the working region. In the step S301, the search mode may be extracting all corner points from a neighborhood point cloud or neighborhood pixel points based on a four-neighborhood graph search algorithm or an eight-neighborhood graph search algorithm, and the like. Then, step S302 is executed.
Step S302, the robot sets a rectangular region where two adjacent corner points are located as a unit region to be subjected to edgewise walking, specifically, after acquiring all corner points in the working region, the robot sets the rectangular region where every two adjacent corner points are located as the unit region to be subjected to edgewise walking according to the preset clock direction, so that the robot divides a plurality of unit regions to be subjected to edgewise walking from the working region in the preset clock direction. Then, the robot starts to perform edgewise walking in the working region, starts to generate an edgewise walking trajectory and marks the edgewise walking trajectory in the map; and then step S303 is executed, wherein the preset clock direction may be regarded as an edgewise walking direction required for the edgewise walking of the robot, the preset clock direction is a clockwise direction or a counterclockwise direction, and is correspondingly an edgewise sweeping direction of a cleaning robot in an edgewise mode; and two adjacent corner points are covered by the unit region to be subjected to edgewise walking where the two adjacent corner points are located. It should be noted that, the robot may sequentially store the corner points and/or the unit regions to be subjected to edgewise walking in a linear storage space according to a collection sequence corresponding to the preset clock direction, and the unit regions to be subjected to edgewise walking may be sorted in the preset clock direction in a sorting direction from large to small or in a sorting direction from small to large, so that the sequence of regional locations which the robot traverses or passes through can be simplified. In this way, the robot can conveniently extract the corner points or the unit regions to be subjected to edgewise walking in a corresponding edgewise stage in sequence during the process of performing edgewise walking in the preset clock direction. In summary, by executing the setting method disclosed in the foregoing embodiments, the robot sets a plurality of unit regions to be subjected to edgewise walking.

It should be noted that, when each contour segment forming the working region is expressed in the map according to the preset clock direction by the unit region to be subjected to edgewise walking where two corresponding adjacent corner points are located, the coordinate coverage range of the unit region to be subjected to edgewise walking in the working region and the sorting thereof in the preset clock direction are expressed in the map according to the preset clock direction, and then the coordinate coverage range of each unit region to be subjected to edgewise walking in the working region and the sorting of each unit region to be subjected to edgewise walking in the preset clock direction are sequentially recorded in the memory of the robot; and in another implementation, when each contour segment is expressed by two corresponding adjacent corner points in the map, the coordinates of every two adjacent corner points in the working region and the sorting thereof in the first preset clock direction are expressed in the map according to the preset clock direction, so that contour information presented by the map is more refined. In the present embodiment, the coordinates of every two adjacent corner points in the working region and the sorting of every two adjacent corner points in the preset clock direction are further sequentially recorded in the memory of the robot, so as to conveniently identify the edgewise walking state subsequently, for example, whether the robot enters one of the unit regions to be subjected to edgewise walking.

Step S303, it is judged whether the edgewise walking trajectory of the robot passes through all unit regions to be subjected to edgewise walking or repeatedly walks through the same batch of unit region to be subjected to edgewise walking, if so, step S307 is executed, and otherwise, step S304 is executed. In the step S303, the robot judges whether itself walks through all unit regions to be subjected to edgewise walking set in the step S302 or repeatedly walks through the same batch of unit regions to be subjected to edgewise walking, if so, executes the step S307, and otherwise executes the step S304. Whether the edgewise walking trajectory of the robot passes through all unit regions to be subjected to edgewise walking herein may be that it is judged whether the edgewise walking trajectory of the robot passes through all unit regions to be subjected to edgewise walking at one time according to the preset clock direction, wherein the same batch of unit regions to be subjected to edgewise walking are a preset number of unit regions to be subjected to edgewise walking that are different from each other; during the process of the robot repeatedly walking through the same batch of unit regions to be subjected to edgewise walking, if the robot repeatedly walks through the same batch of unit regions to be subjected to edgewise walking for one time according to a certain working period, the robot does not repeatedly walk through each unit region to be subjected to edgewise walking within the corresponding working period; the number of times when the robot repeatedly walks through the batch of unit regions to be subjected to edgewise walking is preferably greater than 1 or less than 3; and sufficient judgment redundancy is reserved for the robot to serve as a symbol for indicating an anomaly during the edgewise walking of the robot. During the process of walking through the same batch of unit regions to be subjected to edgewise walking every time, the robot successively walks through each unit region to be subjected to edgewise walking in the batch of unit regions to be subjected to edgewise walking and does not repeatedly traverse the same unit region to be subjected to edgewise walking, which indicates that the robot is trapped in a local region of the working region, and thus cannot continue to walk along the edge to a region outside the local region and cannot traverse a part of unit regions to be subjected to edgewise walking set in the step S302 and a part of corner points searched in the step S301, so that the robot cannot complete the edgewise walking in the working region; preferably, the greater the region where the robot is trapped is, the greater the preset number is set to be, and the smaller the number of times of repeated walking of the robot within a specified edgewise walking time is; and on the contrary, the smaller the preset number is set to be, and the greater the number of times of repeated walking of the robot within the specified edgewise walking time is.

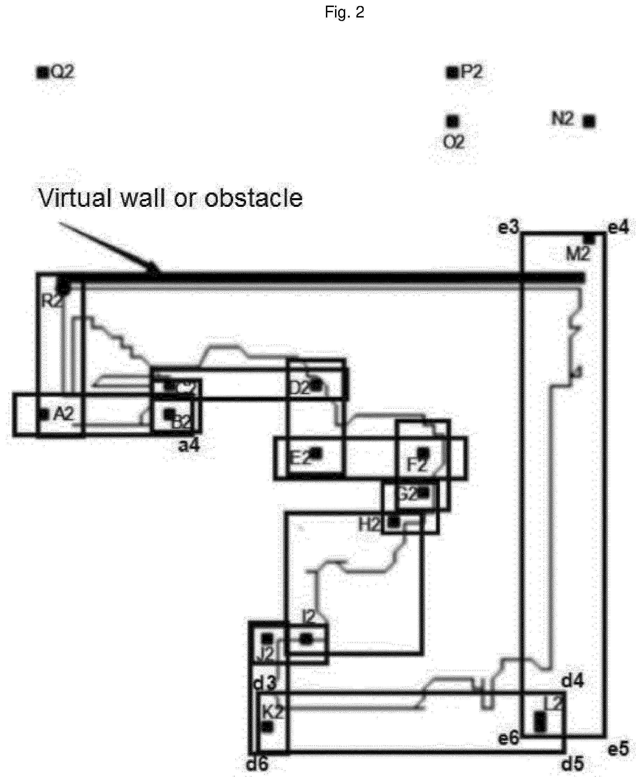

Step S304, the robot performs edgewise walking in the working region, generates an edgewise walking trajectory at the same time, and marks the edgewise walking trajectory in the map, as shown by a closed bent trajectory in Fig. 1, which may cover each small rectangular region shown in the figure; and then, step S305 is executed. Specifically, the robot may perform edgewise walking in the working region according to the preset clock direction or an opposite direction of the preset clock direction, for example, the preset clock direction is set as a counterclockwise direction, and then the robot starts to perform edgewise walking in the counterclockwise direction or clockwise direction from the point A1 in Fig. 1 or the point A2 in Fig. 2, wherein since the corner points and the unit region to be subjected to edgewise walking corresponding to the two adjacent corner points are marked in the memory or the map of the robot according to the preset clock direction, when the robot starts to perform the edgewise walking in the clockwise direction from the point A1 in Fig. 1 or the point A2 in Fig. 2, after a corner point serving as a marking starting point in the memory of the robot is confirmed, relative locations of the unit regions to be subjected to edgewise walking through which the current edgewise walking passes may be identified by exchanging the sorting of the corner points or the unit regions to be subjected to edgewise walking, wherein the relative locations include location information of the current edgewise walking location of the robot relative to the point A1 in Fig. 1 or the point A2 in Fig. 2.

Step S305, it is judged whether the edgewise walking trajectory of the robot passes through the unit regions to be subjected to edgewise walking, if so, step S306 is executed, and otherwise the step S304 is executed. During the process of performing the edgewise walking in the working region, the robot needs to judge, in real time, whether to walk into one of the unit regions to be subjected to edgewise walking. Preferably, when the robot walks along the contour of the working region, the current advancing direction of the robot is parallel to a contour segment of the current edgewise walking, so as to form an edgewise walking posture, and the robot may walk through the corner points or the unit region to be subjected to edgewise walking corresponding to the two adjacent corner points. Since a path formed by the edgewise walking of the robot becomes more consistent with the contour segment, including the direction and the length dimension, if the edgewise walking state of the robot is positioned, more coordinate points in the map need to be matched and compared in the prior art, however, in the present embodiment, the edgewise walking location situations of the robot are tracked and positioned by setting the unit regions to be subjected to edgewise walking, and the calculation amount is simplified by using vertex information of the rectangular regions.

It should be noted that, when the preset clock direction is the clockwise direction and is configured as the edgewise walking direction of the robot, the edgewise walking direction of the robot is configured as a left edgewise walking direction of the edgewise walking of the robot, so that a location point in the contour of an obstacle or a wall surface along which the robot walks is located on the left side of the advancing direction of the robot, wherein an initial edgewise walking starting point is located on the left side of the advancing direction of the robot. When the preset clock direction is the counterclockwise direction and is configured as the edgewise walking direction of the robot, the edgewise walking direction is configured as a right edgewise walking direction of the edgewise walking of the robot, so that the location point in the contour of the obstacle or the wall surface along which the robot walks is located on the right side of the advancing direction of the robot, wherein the initial edgewise walking starting point is located on the right side of the advancing direction of the robot.

Step S306, the robot marks the unit region to be subjected to edgewise walking through which the edgewise walking trajectory thereof currently passes as a unit region to be subjected to edgewise walking which has been walked through, that is, it is determined that the edgewise walking trajectory of the robot has passed through the unit region to be subjected to edgewise walking, and then the step S303 is executed. Specifically, when an abscissa recorded by the robot in real time is greater than the minimum abscissa of a vertex of the unit region to be subjected to edgewise walking and less than the maximum abscissa of the vertex of the unit region to be subjected to edgewise walking, and an ordinate recorded by the robot in real time is greater than the minimum ordinate of the vertex of the unit region to be subjected to edgewise walking and less than the maximum ordinate of the vertex of the unit region to be subjected to edgewise walking, it is determined that the current abscissa of the robot has already been in the coordinate coverage range of the abscissa of the unit region to be subjected to edgewise walking and that the current ordinate of the robot has already been in the coordinate coverage range of the ordinate of the unit region to be subjected to edgewise walking, then it is determined that the robot enters the unit region to be subjected to edgewise walking, and it is determined that the edgewise walking trajectory of the robot passes through the unit region to be subjected to edgewise walking and that the robot walks through the unit region to be subjected to edgewise walking, therefore a contour segment consistent with the extension direction of the two adjacent corner points covered by the edgewise walking of the robot is determined, wherein the unit region to be subjected to edgewise walking is a planar region in the map, and the coordinates of four vertexes of the unit region to be subjected to edgewise walking may be learned in the step S302, including the maximum abscissa, the minimum abscissa, the maximum ordinate and the minimum ordinate, so that the coordinate coverage range of the unit region to be subjected to edgewise walking is formed. Specifically, during the process of executing the embodiment corresponding to the setting method, since the rectangular region where the two adjacent corner points are located and which has the specific geometric relationship may be obtained by conversion, the method for calculating whether the robot passes through a certain small rectangular box at a certain moment may be simplified to judge whether real-time coordinates of the robot are within the coordinate coverage range of the corresponding unit region to be subjected to edgewise walking, therefore not only can the data volume be effectively simplified, but the correctness of subsequently triggering the termination of edgewise walking is also improved.

In some embodiments, after entering the coordinate coverage range of the unit region to be subjected to edgewise walking, the robot continues to judge that the distance between the current location coordinate of the robot and one of the two adjacent corner points covered by the unit region to be subjected to edgewise walking is greater than a preset distance threshold value, then it is determined that the robot enters the unit region to be subjected to edgewise walking and that the edgewise walking trajectory of the robot passes through the unit region to be subjected to edgewise walking, and it is determined that the robot walks through the unit region to be subjected to edgewise walking, wherein when the greater the area of a region occupied by the unit region to be subjected to edgewise walking is, the greater the preset distance threshold value is set to be, so the longer the contour segment consistent with the extension direction of the two adjacent corner points covered by the unit region to be subjected to edgewise walking is, accordingly the length of the minimum trajectory for accommodating the robot to perform edgewise walking become greater, and contour segments allowing the robot to walk along during edgewise walking become more, thus the region covered by the edgewise walking of the robot becomes greater, the integrity of the edgewise walking of the robot is improved, but the calculation amount of the robot is not increased, this is because it is unnecessary to calculate coordinate information of location points or pixel points one by one to identify whether the robot performs edgewise walking on the contour segment consistent with the extension direction of the covered two adjacent corner points, but the coordinate information of a certain vertex of the corresponding unit region to be subjected to edgewise walking is calculated and compared, and moreover, the coordinate coverage of each unit region to be subjected to edgewise walking in the working region may be obtained from the step S302. Preferably, the preset distance is greater than or equal to the body width of the robot to facilitate the pass of the robot.

Step S307, the robot stops walking along the edge in the working region. Specifically, when the edgewise walking trajectory of the robot passes through all unit regions to be subjected to edgewise walking, it is judged that the robot has walked along the contour of the working region, the robot has walked through all unit regions to be subjected to edgewise walking set in the step S302 and may walk through all unit regions to be subjected to edgewise walking set in the step S302 at one time according to the preset clock direction, and the edgewise walking trajectory of the robot has traversed 19 small rectangular regions in Fig. 1, so it is indicated that the edgewise walking may be terminated to avoid the misjudgment problem involved in the background art, and the robot is controlled to not terminate the edgewise walking in advance, thereby improving the accuracy and timeliness of the robot for judging the termination of the edgewise walking. Specifically, after the robot starts the edgewise walking from one edgewise walking starting point, when the edgewise walking trajectory of the robot passes through all unit regions to be subjected to edgewise walking, it is determined that the robot has walked along the edge for a circle in the working region, but does not necessarily return to the edgewise walking starting point, thus it is unnecessary to calculate specific pose information (including angle information and coordinate information) on the edgewise walking trajectory, but it is only judged whether location coordinates measured by the robot in real time enter the last unit region to be subjected to edgewise walking, thereby simplifying the calculation complexity. The traversal sequence of the robot for the last unit region to be subjected to edgewise walking in the preset clock direction may be set in the step S302; and corresponding to Fig. 1, the robot starts to walk along the edge in the working region in the counterclockwise direction starting from the corner point A1, and in the foregoing step S301 and step S302, the corner point A1 is firstly searched, the search of other corner points is continued in the working region in the counterclockwise direction, and the corresponding unit regions to be subjected to edgewise walking are sequentially set, therefore the two adjacent corner points corresponding to the unit regions to be subjected to edgewise walking through which the robot walks in the counterclockwise direction are sequentially the corner point A1 and the corner point B1, the corner point B1 and the corner point C1, the corner point C1 and the corner point D1, the corner point D1 and the corner point E1, the corner point E1 and the corner point F1, the corner point F1 and the corner point G1, the corner point G1 and the corner point H1, the corner point H1 and the corner point I1, the corner point I1 and the corner point J1, the corner point J1 and the corner point K1, the corner point K1 and the corner point L1, the corner point L1 and the corner point M1, the corner point M1 and the corner point N1, the corner point N1 and the corner point O1, the corner point O1 and the corner point P1, the corner point P1 and the corner point Q1, the corner point Q1 and the corner point R1, the corner point R1 and the corner point S1, and the corner point S1 and the corner point A1. Then, the robot performs edgewise walking in the working region along the contour of the working region in the counter clockwise direction, the generated edgewise walking trajectory sequentially passes through each unit region to be subjected to edgewise walking, corresponding to Fig. 1, the robot walks through 19 unit regions to be subjected to edgewise walking in total, at this time, the number of constructed unit regions to be subjected to edgewise walking is equal to the number of corner points searched in the same working region, the edgewise walking trajectory of the robot has passed through all generated unit regions to be subjected to edgewise walking, but the robot does not necessarily return to the corner point A1, and is only located in the unit region to be subjected to edgewise walking where the corner point S1 and the corner point A1 are located, preferably, during this process, robot only walks through each unit region to be subjected to edgewise walking once.

In addition, when it is judged that the edgewise walking trajectory of the robot repeatedly passes through the same batch of unit regions to be subjected to edgewise walking for multiple times, the robot stops walking along the edge in the working region, specifically, every time when the robot repeatedly walks through the same batch of unit regions to be subjected to edgewise walking, the robot walks through each unit region to be subjected to edgewise walking according to the preset clock direction or the opposite direction of the preset clock direction; and during the current process of the robot walking through the same batch of unit regions to be subjected to edgewise walking, the robot walks through each unit region to be subjected to edgewise walking in the same batch of unit regions to be subjected to edgewise walking once, wherein all unit regions to be subjected to edgewise walking in the same batch of unit regions to be subjected to edgewise walking are set in the working region according to the preset clock direction. In some embodiments, each edgewise walking of the robot may be regarded as an edgewise walking behavior occurring within one edgewise walking period, and within each edgewise walking period, the robot successively walks through a preset number of unit regions to be subjected to edgewise walking that are different from each other in the preset clock direction or the opposite direction of the preset clock direction, wherein each unit region to be subjected to edgewise walking in the same batch of unit regions to be subjected to edgewise walking is distributed in the working region according to the preset clock direction, therefore during every process of the robot repeatedly performing edgewise walking on the same batch of unit regions to be subjected to edgewise walking, the robot cannot repeatedly walk through each unit region to be subjected to edgewise walking in the same batch of unit regions to be subjected to edgewise walking according to the preset clock direction. It is worth noting that, by executing the setting method disclosed in the foregoing embodiments, the robot sets a plurality of unit regions to be subjected to edgewise walking, and these unit regions to be subjected to edgewise walking may be set in the working region according to the preset clock direction. The number of unit regions to be subjected to edgewise walking set by using the setting method is greater than the preset number, the preset number may be specifically determined according to the size of the region where the robot repeats the edgewise walking behavior, and since the robot is trapped to repeat the edgewise walking behavior, the number of unit regions to be subjected to edgewise walking set by using the setting method may not be equal to the preset number. For example, when a user separates the working region by using a virtual wall on a mobile terminal or the working region is partitioned by an obstacle in the actual environment, such that the robot cannot smoothly perform edgewise walking in the entire working region, the edgewise walking trajectory of the robot repeatedly passes through the preset number of unit regions to be subjected to edgewise walking for multiple times, and the robot does not repeatedly walk through the same unit region to be subjected to edgewise walking every time, then the robot acquires geometric information of a contour associated with a corresponding trapped state, an edgewise walking anomaly may be identified in time without traversing all corner points and all unit regions to be subjected to edgewise walking, and the edgewise walking is terminated, thereby avoiding the occurrence of a loopback in the edgewise walking trajectory of the robot in the same local region, and ensuring the working efficiency of the robot.

In conclusion, in the present disclosure, the contour of the working region is first represented by the rectangular region corresponding to two adjacent corner points in the preset clock direction or the two corner points, so that the robot can identify the edgewise walking condition of the robot by judging whether the edgewise walking trajectory passes through the rectangular region corresponding to two corresponding corner points, and then whether the edgewise walking should be stopped is determined by judging whether the edgewise walking trajectory of the robot has sequentially covered a map contour segment corresponding to the entire working region according to the preset clock direction. When the robot is a cleaning robot, the sweeping coverage rate in the working region and the purpose of cleaning garbage in dead corners of the room are fully considered, and the edgewise walking is selected to be stopped in a proper edgewise walking stage by introducing the number of traversing the unit regions to be subjected to edgewise walking. Therefore, not only can the edgewise walking contour segment of the robot in the working region be conveniently judged, but whether to terminate the edgewise walking mode is also accurately judged, thereby reducing the number of times of the robot repeatedly traversing the local region or terminating the edgewise walking in advance due to misjudgment, and thus improving the working efficiency of the robot in the working region.

In addition, in the case of an abnormal situation in which a part of passable region of the working region is blocked by the obstacle or a working forbidden region is defined by the virtual wall, the robot cannot smoothly perform complete edgewise walking in the working region, at this time, just by means of judging that the robot repeatedly walks through a batch of rectangular regions for multiple times, it is determined that the robot has an anomaly during edgewise walking, so that the edgewise walking can be stopped in time to ensure the working efficiency and to reduce the number of times of the robot repeatedly traversing the same local region.

As an embodiment, the greater the size of the obstacle in the working region is and/or the greater the working forbidden region set by the virtual wall is, the greater a partitioned region of the robot in the working region is, then the robot sets the preset number to be smaller, and thus the number of unit regions to be subjected to edgewise walking through which the robot does not repeatedly walk in the passable region is reduced. The smaller the size of the obstacle in the working region is and/or the smaller the working forbidden region set by the virtual wall is, the smaller the partitioned region of the robot in the working region is, then the robot sets the preset number to be greater, and thus the number of unit regions to be subjected to edgewise walking through which the robot walks in the passable region is increased, wherein the robot cannot walk along the edge in the partitioned region, that is, the robot cannot walk through the corresponding unit region to be subjected to edgewise walking. The greater an overlapping region between two unit regions to be subjected to edgewise walking is, the smaller the preset number is set to be. Generally, in a wall corner region, the overlapping region between two unit regions to be subjected to edgewise walking is relatively large, in order to judge whether the robot is trapped in the wall corner region during edgewise walking, that is, to judge whether the edgewise walking trajectory of the robot repeatedly passes through a batch of unit regions to be subjected to edgewise walking for multiple times, it is only necessary to set the preset number to be relatively small, and the preset number is preferably 2.

In some embodiments, when the robot may be blocked by some movable objects (the opening and closing of the door of the room, the movement of tables and chairs, and the like) in the room, there is misjudgment of judging whether the robot walks a circle along the contour of the working region just from the movement angle posture of the robot. Specifically, in some embodiments, before walking along the edge back to an effective edgewise walking starting point, the robot may turn around or be trapped in a local region, for example, the bottom (more dirt) of a dining table in a dining room, the robot performs repeated edgewise walking behaviors in the local region, and path loopback occurs in the edgewise walking trajectory correspondingly marked in the map, such that the rotation angle of the robot may reach or even exceed 360 degrees. However, regardless of a first circle of edgewise walking or a second circle of edgewise walking, if the robot is trapped by the foregoing obstacle to turn around or skip and thus cannot continue to walk along the wall, the robot detects the occurrence of the path loopback in the local region, and at this time, the robot will choose to stop walking along the edge, thereby avoiding affecting the working efficiency; or, when the robot walks along the edge in a global region (which is equivalent to the working region), it is equivalent to walking along the contour of the wall surface in the entire indoor working region, and if the same path loopback situation exists in one local region, in order to avoid repeated traversal, the robot stops walking along the edge in time.

As an embodiment, as can be seen with reference to Fig. 2, in the working region where the robot is located, the robot walks along the contour of the working region, that is, walks along the edge, in the counterclockwise direction starting from a corner point A2, but is blocked by the virtual wall or the obstacle shown in Fig. 2, so that the closed bent trajectory in Fig. 2 is correspondingly formed to serve as the edgewise walking trajectory of the robot in Fig. 2. In Fig. 2, during the process of the robot executing the step S301 and the step S302, the robot sequentially constructs each rectangular frame according to the counterclockwise direction starting from the corner point, wherein the rectangular frames are correspondingly the unit regions to be subjected to edgewise walking, in the corresponding map in Fig. 2, corner points searched in the counterclockwise direction are sequentially the corner point A2, a corner point B2, a corner point C2, a corner point D2, a corner point E2, a corner point F2, a corner point G2, a corner point H2, a corner point I2, a corner point J2, a corner point K2, a corner point L2, a corner point M2, a corner point N2, a corner point O2, a corner point P2, a corner point Q2, and a corner point R2; and then, the robot may start edgewise walking on a path that extends counterclockwise from the corner point A2 to the corner point B2, wherein seen from the counterclockwise direction, when the corner point A2 is the first searched corner point, the last searched corner point may be the corner point R2, and one corner point is reduced relative to Fig. 1, because the corner point has been covered by the illustrated obstacle or virtual wall.

In the embodiment of Fig. 2, after walking along the edge to a contour segment (a thick black horizontal line segment in Fig. 2, the corner point R2 is below the same, and the corner point M is above the same) set by the illustrated obstacle or virtual wall, the robot cannot walk along the edge to the unit region to be subjected to edgewise walking in the front, and thus walks along the contour segment to the unit region to be subjected to edgewise walking where the corner point R2 is located, wherein the corner point M2 and the corner point R2 are not set as the two adjacent corner points, but the corner point M2 and the corner point N2 are set as the two adjacent corner points, so as to construct the unit region to be subjected to edgewise walking (since the robot does not actually walk through, the rectangular region is not correspondingly marked in Fig. 2); specifically, the unit region to be subjected to edgewise walking is an edgewise walking trajectory extending from the corner point M2 counterclockwise to the corner point R2, but is not a connecting line of the corner point M2 and the corner point R2, wherein seen from the counterclockwise direction, after the robot walks along the edge to the unit region to be subjected to edgewise walking where the corner point R2 and the corner point A2 are located, the edgewise walking trajectory may be connected with the previously formed edgewise walking trajectory to form a closed walking trajectory, so as to serve as a circle of edgewise walking trajectory of the robot in the working region, but it does not represent that the robot performs edgewise walking along the complete contour thereof in the working region; and specifically, in the closed region enclosed by the foregoing edgewise walking trajectory, the robot may repeatedly enter each unit region to be subjected to edgewise walking in the closed region along the previously generated edgewise walking trajectory, wherein it may be automatically identified every time when the robot enters one unit region to be subjected to edgewise walking according to whether the current location coordinates of the robot are within the coordinate coverage range of the unit region to be subjected to edgewise walking, the coordinate coverage range of the unit region to be subjected to edgewise walking and the location relationship of the unit region to be subjected to edgewise walking relative to the corner point A2 have been recorded in the step S302, and thus can be sequentially read out from the memory of the robot according to the preset clock direction (for example, when the counterclockwise direction is set as the edgewise walking direction). Further, every time when the robot walks along the edge for a circle, the robot sequentially walks in the counterclockwise direction and does not repeatedly walk in the same unit region to be subjected to edgewise walking, wherein the number of unit regions to be subjected to edgewise walking through which the robot walks in each circle is equal to the number of unit regions to be subjected to edgewise walking which have been marked in Fig. 2, and is less than the number of all unit regions to be subjected to edgewise walking (the unit regions to be subjected to edgewise walking corresponding to all corner points that need to undergo edgewise walking) set in the step S302. In the present embodiment, after the robot is allowed to repeatedly walk along the edge for multiple circles in a region hindered by the contour segment that is set by the illustrated obstacle or virtual wall, an abnormal state of edgewise walking of the robot is determined, so that it can be more accurately determined that the edgewise walking trajectory of the robot is in a loopback state in the region corresponding to Fig. 2, and at this time, the robot is controlled to stop walking along the edge.

As one construction mode of the unit region to be subjected to edgewise walking, for a pair of two adjacent corner points, for example, the corner point K2 and the corner point L2, the ordinate value of the corner point K2 is equal to the ordinate value of the corner point L2, and the abscissa value of the corner point K2 is not equal to the abscissa value of the corner point K2, then line segments parallel to a connecting line of the K2 and the corner point L2 are selected as long edges of a rectangular region, specifically the selected long edges of the rectangular region in Fig. 2 are respectively a line segment d3d4 above the connecting line of the K2 and the corner point L2, and a line segment d5d6 below the connecting line of the K2 and the corner point L2, the length of the line segment d3d4 is set to be greater than or equal to the length of the connecting line of the K2 and the corner point L2, meanwhile the length of the line segment d5d6 is set to be equal to the length of the line segment d3d4, the line segment d3d4 is obtained by a point d3 extending towards a point d4 in a direction parallel to the connecting line of the K2 and the corner point L2 (extending from left to right), and then a line segment d4d5 is connected with a line segment d6d3 to construct a rectangular region d3d4d5d6, that is, the unit region to be subjected to edgewise walking, and the rectangular region d3d4d5d6 frames the corner point K2 and the corner point L2. On this basis, according to the construction mode, pairs of two adjacent corner points required for constructing the unit region to be subjected to edgewise walking in the counterclockwise direction are sequentially the corner point A2 and the corner point B2, the corner point C2 and the corner point D2, the corner point E2 and the corner point F2, the corner point I2 and the corner point J2, and the corner point K2 and the corner point L2.

As another construction mode of the unit region to be subjected to edgewise walking, for a pair of two adjacent corner points, for example, the corner point D2 and the corner point E2, the abscissa value of the corner point D2 is equal to the abscissa value of the corner point E2, and the ordinate value of the corner point D2 is not equal to the ordinate value of the corner point E2, then line segments parallel to a connecting line of the corner point D2 and the corner point E2 are selected as long edges of a rectangular region, and the length of the long edge is set to be greater than the length of the connecting line of the corner point D2 and the corner point E2, so as to construct a corresponding rectangular region, that is, the unit region to be subjected to edgewise walking, the length of a short edge of the rectangular region is associated with the body width of the robot or the thickness of the wall body, the rectangular region frames the corner point D2 and the corner point E2, and the length of the connecting line of the corner point D2 and the corner point E2 is greater than the length of the short edge of the rectangle where the same is located.

As still another construction mode of the unit region to be subjected to edgewise walking, for a pair of two adjacent corner points, for example, the corner point L2 and the corner point M2, the abscissa value of the corner point L2 is not equal to the abscissa value of the corner point M2, and the ordinate value of the corner point L2 is not equal to the ordinate value of the corner point M2, then a line segment parallel to a connecting line of the corner point L2 and the corner point M2 is selected as a diagonal line of a rectangular region, the diagonal line is correspondingly a connecting line of a point e4 and a point e6 in Fig. 2, the connecting line of the point e4 and the point e6 is parallel to the connecting line of the corner point L2 and the corner point M2, the length of a line segment e4e6 is set to be greater than the length of the connecting line of the corner point L2 and the corner point M2, and the line segment e4d6 is formed by the point e4 extending towards the point e6 in a direction parallel to the connecting line of the corner point L2 and the corner point M2 (extending from top right to lower left); meanwhile, another diagonal line is set in a direction intersecting with a connecting line of a point e3 and a point e5, the other diagonal line is specifically a line segment extending from the point e3 to the point e5, and the length of a line segment e3e5 is set to be greater than the length of the connecting line of the corner point L2 and the corner point M2; and then, the point e3 and the point e4, the point e4 and the point e5, the point e5 and the point e6, and the point e6 and the point e6 are sequentially connected end to end to construct a rectangular region e3e4e5e6, that is, the unit region to be subjected to edgewise walking, the length of the short edge of the rectangular region is greater than or equal to the body width of the robot or the thickness of the wall body, and the rectangular region frames the corner point L2 and the corner point M2, wherein the line segment e3e4 and the line segment e5e6 serve as the short edges of the rectangular region e3e4e5e6. On this basis, according to the construction mode, pairs of two adjacent corner points required for constructing the unit region to be subjected to edgewise walking in the counterclockwise direction are sequentially the corner point G2 and the corner point H2, the corner point H2 and the corner point I2, and the corner point L2 and the corner point M2.

Since the edgewise walking trajectory of the robot is blocked by the contour segment (the thick black horizontal line segment in Fig. 2, the corner point R2 is below the same, and the corner point M is above the same) set by the illustrated obstacle or virtual wall, the working region is divided into an upper sub-region and a lower sub-region, therefore the robot cannot continue to walk along the edge to the corner point N2, the corner point O2, the corner point P2 and the corner point Q2, that is, the robot cannot walk along the edge in the counterclockwise direction to pass through the unit region to be subjected to edgewise walking corresponding to the foregoing corner points and then walk along the edge to return to the corner point R2 on this basis; at this time, after passing through the unit region to be subjected to edgewise walking where the corner point L2 and the corner point M2 are located, the robot walks to the corner point R2 along the contour segment set by the obstacle or the virtual wall, so as to enter the unit region to be subjected to edgewise walking where the corner point L2 and the corner point M2 are located, at this time, the number of a batch of unit regions to be subjected to edgewise walking through which the robot walks along the edge in the working region is less than the number of all unit regions to be subjected to edgewise walking set in the step S302, that is, in the local region blocked by the obstacle or the virtual wall, the number of unit regions to be subjected to edgewise walking through which the robot walks along the edge during a circle of edgewise walking is less than the number of all unit regions to be subjected to edgewise walking set in the step S302; then, on the premise of not triggering an edgewise walking stop instruction, the robot continues to walk along the contour of the working region, and starts to repeatedly walk through, for a new circle in the working region in the counterclockwise direction, a batch of unit regions to be subjected to edgewise walking which has been walked through in the previous circle, the robot repeatedly walks for two circles in this way, and then stops walking along the edge in the working region, although the unit region to be subjected to edgewise walking corresponding to the corner point above the contour segment set by the illustrated obstacle or virtual wall, the robot may be prevented from walking along the edge in the working region all the time, impacts on misjudgment factors of the edgewise walking are also eliminated, and the edgewise walking is stopped in time, thereby ensuring the working efficiency of the robot and reducing the number of times of repeated traversal.

As an embodiment, after the robot enters the last unit region to be subjected to edgewise walking that has not been walked through in the preset clock direction, it is determined that the robot walks through the unit region to be subjected to edgewise walking, the edgewise walking trajectory of the robot in the working region passes through all unit regions to be subjected to edgewise walking, and then the robot stops walking along the edge; in the present embodiment, the sorting of the unit regions to be subjected to edgewise walking in the preset clock direction is obtained in advance, so as to determine a relative location relationship of one unit region to be subjected to edgewise walking in the preset clock direction, so that the robot can conveniently walk through all unit regions to be subjected to edgewise walking at one time according to the preset clock direction; if there is no obstacle or virtual wall blocking or partitioning the working region, in the present embodiment, the traversal sequence of the robot in the preset clock direction for the last unit region to be subjected to edgewise walking that has not been walked through may be set in the step S302; and corresponding to Fig. 1, the robot starts to walk along the edge in the working region in the counterclockwise direction starting from the corner point A1, and in the foregoing step S301 and step S302, the corner point A1 is firstly searched, the search of other corner points is continued in the working region in the counterclockwise direction, and the corresponding unit regions to be subjected to edgewise walking are sequentially set, therefore the two adjacent corner points corresponding to the unit regions to be subjected to edgewise walking set by the robot in the counterclockwise direction are sequentially the corner point A1 and the corner point B1, the corner point B1 and the corner point C1, the corner point C1 and the corner point D1, the corner point D1 and the corner point E1, the corner point E1 and the corner point F1, the corner point F1 and the corner point G1, the corner point G1 and the corner point H1, the corner point H1 and the corner point I1, the corner point I1 and the corner point J1, the corner point J1 and the corner point K1, the corner point K1 and the corner point L1, the corner point L1 and the corner point M1, the corner point M1 and the corner point N1, the corner point N1 and the corner point O1, the corner point O1 and the corner point P1, the corner point P1 and the corner point Q1, the corner point Q1 and the corner point R1, the corner point R1 and the corner point S1, and the corner point S1 and the corner point A1, therefore the relative location relationship of each unit region to be subjected to edgewise walking in the preset clock direction is determined in the working region, that is, the sorting and the coordinate coverage range of each unit region to be subjected to edgewise walking in the counterclockwise direction are determined. Then, the robot performs edgewise walking in the working region along the contour of the working region in the counterclockwise direction, the generated edgewise walking trajectory sequentially passes through each unit region to be subjected to edgewise walking, and the corner point S1 and the corner point A1 form the last unit region to be subjected to edgewise walking that has not been walked through, which corresponds to the rectangular region surrounding the corner point S1 and the corner point A1 in Fig. 1.

In some embodiments, if there is no obstacle or virtual wall blocking or partitioning the working region, corresponding to Fig. 1, the robot starts to walk along the edge in the working region in the clockwise direction starting from the corner point A1, and in the foregoing step S301 and step S302, the corner point A1 is firstly searched, the search of other corner points is continued in the working region in the counterclockwise direction, and the corresponding unit regions to be subjected to edgewise walking are sequentially set, therefore the corner points searched by the robot in the counterclockwise direction are sequentially the corner point A1, the corner point B1, the corner point C1, the corner point D1, the corner point E1, the corner point F1, the corner point G1, the corner point H1, the corner point 11, the corner point J1, the corner point K1, the corner point L1, the corner point M1, the corner point N1, the corner point O1, the corner point P1, the corner point Q1, the corner point R1, and the corner point S1; and then the relative location relationship of each unit region to be subjected to edgewise walking in the clockwise direction is determined in the working region, that is, the sorting and the coordinate coverage range of each unit region to be subjected to edgewise walking in the clockwise direction are determined, wherein the sorting of each unit region to be subjected to edgewise walking in the clockwise direction is exchanged relative to the sorting thereof in the counterclockwise direction; and two adjacent corner points corresponding to the unit regions to be subjected to edgewise walking through which the robot passes in the clockwise direction are sequentially the corner point A1 and the corner point S1, the corner point S1 and the corner point R1, the corner point R1 and the corner point Q1, the corner point Q1 and the corner point P1, the corner point P1 and the corner point O1, the corner point O1 and the corner point N1, the corner point N1 and the corner point M1, the corner point M1 and the corner point L1, the corner point L1 and the corner point K1, the corner point K1 and the corner point J1, the corner point J1 and the corner point I1, the corner point I1 and the corner point H1, the corner point H1 and the corner point G1, the corner point G1 and the corner point F1, the corner point F1 and the corner point E1, the corner point E1 and the corner point D1, the corner point D1 and the corner point C1, the corner point C1 and the corner point B1, and the corner point B1 and the corner point A1, therefore the last unit region to be subjected to edgewise walking through which the robot has not passed in the working region along the contour of the working region according to the clockwise direction is the unit region to be subjected to edgewise walking wherein the corner point B1 and the corner point A1 are located, which corresponds to the rectangular region surrounding the corner point s1 and the corner point A1 in Fig. 1.

In the above embodiments, the technical solutions of the present application are exemplarily described by taking a robot (referred to as a sweeping robot) capable of executing a sweeping task as an example, but it is not limited to the sweeping robot. The above embodiments are merely illustrations to the technical concepts and characteristics of the present disclosure, and are intended to enable those skilled familiar with this art to understand the content of the present disclosure and implement the present disclosure accordingly, but cannot be used to limit the protection scope of the present disclosure. Any equivalent transformations or modifications made according to the spirit of the present disclosure shall fall within the protection scope of the present disclosure.

## Claims

1. A map region contour-based setting method, wherein before the setting method is executed, a robot acquires a map of a working region, and the map is used for representing a contour of the working region, so that the robot walks along the contour;
the setting method comprises:
searching for corner points of the working region from the map by the robot;
and then setting, by the robot, rectangular regions, wherein two adjacent corner points are located in each of the rectangular regions as a unit region to be subjected to edgewise walking, the two adjacent corner points are covered by the unit region to be subjected to edgewise walking where the two adjacent corner points are located; and
in the map, a contour consistent with an extension direction of two adjacent corner points covered by each unit region to be subjected to edgewise walking is expressed by using the unit region to be subjected to edgewise walking or the two adjacent corner points covered by the unit region to be subjected to edgewise walking.

2. The setting method according to claim 1, wherein setting, by the robot, the rectangular regions, wherein the two adjacent corner points are located in each of the rectangular regions as the unit region to be subjected to edgewise walking comprises:
when there are equal coordinate values of one dimension in the two adjacent corner points, selecting a line segment parallel to a connecting line of the two adjacent corner points as a long edge of the rectangular region, and setting the length of the long edge of the rectangular region to be a first preset multiple of a linear distance between the two adjacent corner points, so as to construct the rectangular region; and then setting the rectangular region as the unit region to be subjected to edgewise walking, wherein the first preset multiple is greater than or equal to 1; and
when the coordinate values of the same dimension in the two adjacent corner points are unequal, selecting a line segment parallel to the connecting line of the two adjacent corner points or a line segment intersecting with the connecting line of the two adjacent corner points as a diagonal line of the rectangular region, and setting the length of the diagonal line of the rectangular region to be a second preset multiple of the linear distance between the two adjacent corner points, so as to construct the rectangular region; and then setting the rectangular region as the unit region to be subjected to edgewise walking, wherein the second preset multiple is greater than 1; and
the two adjacent corner points are two corner points uniquely covered by the rectangular region.

3. The setting method according to claim 2, wherein during the process of setting the unit region to be subjected to edgewise walking in the working region, there are the following cases:
when there are equal coordinate values of one dimension in the two adjacent corner points, the long edge of the rectangular region comprises two endpoints, one of the endpoints extends towards the other endpoint in a direction parallel to the connecting line of the two adjacent corner points, so as to obtain the long edge of the rectangular region, wherein the length of a connecting line of the two endpoints is equal to the first preset multiple of the linear distance between the two adjacent corner points, and a projection line segment of the connecting line of the two adjacent corner points on the connecting line of the two endpoints does not exceed the connecting line of the two endpoints;
when there are equal coordinate values of one dimension in the two adjacent corner points, there is an intermediate point on a vertical line of the connecting line of the two adjacent corner points, the intermediate point respectively extends towards the two sides of the intermediate point in a direction parallel to the connecting line of the two adjacent corner points, so as to obtain the long edge of the rectangular region, wherein the sum of extension lengths on the two sides of the intermediate point is equal to the first preset multiple of the linear distance between the two adjacent corner points, and a projection line segment of the connecting line of the two adjacent corner points on the long edge of the rectangular region does not exceed the long edge of the rectangular region;
when the coordinate values of the same dimension in the two adjacent corner points are unequal, the diagonal line of the rectangular region comprises two endpoints, one of the endpoints extends towards the other endpoint in the direction parallel to the connecting line of the two adjacent corner points or a direction intersecting with the connecting line of the two adjacent corner points, so as to obtain the diagonal line of the rectangular region, wherein the length of the connecting line of the two endpoints is equal to the second preset multiple of the linear distance between the two adjacent corner points, and the projection line segment of the connecting line of the two adjacent corner points on the connecting line of the two endpoints does not exceed the connecting line of the two endpoints; and
when the coordinate values of the same dimension in the two adjacent corner points are unequal, there is an intermediate point on the vertical line of the connecting line of the two adjacent corner points, the intermediate point respectively extends towards the two sides of the intermediate point in the direction parallel to the connecting line of the two adjacent corner points or the direction intersecting with the connecting line of the two adjacent corner points, so as to obtain the diagonal line of the rectangular region, wherein the sum of extension lengths on the two sides of the intermediate point is equal to the second preset multiple of the linear distance between the two adjacent corner points, and a projection line segment of the connecting line of the two adjacent corner points on the diagonal line of the rectangular region does not exceed the diagonal line of the rectangular region.

4. The setting method according to claim 1, wherein setting, by the robot, the rectangular regions, wherein the two adjacent corner points are located in each of the rectangular regions as the unit region to be subjected to edgewise walking comprises:
when there are equal coordinate values of one dimension in the two adjacent corner points, setting the connecting line of the two adjacent corner points as a long edge of the rectangular region, so that the length of the rectangular region is equal to the linear distance between the two adjacent corner points, so as to construct the rectangular region, wherein the two adjacent corner points are two corner points uniquely covered by the rectangular region; and then setting the rectangular region as the unit region to be subjected to edgewise walking; and
when the coordinate values of the same dimension in the two adjacent corner points are unequal, setting the connecting line of the two adjacent corner points as a diagonal line of the rectangular region, so as to construct the rectangular region, wherein the two adjacent corner points are two corner points uniquely covered by the rectangular region; and then setting the rectangular region as the unit region to be subjected to edgewise walking.

5. The setting method according to claim 2 or 4, wherein a minimum edge length of the unit region to be subjected to edgewise walking is greater than or equal to a body width of the robot, or greater than or equal to a wall thickness of the working region, so as to reserve a space for the robot to enter the unit region to be subjected to edgewise walking.

6. The setting method according to claim 2 or 4, wherein when an edgewise walking trajectory of the robot passes through the unit region to be subjected to edgewise walking, it is determined that the robot has walked along a contour segment consistent with the extension direction of the two adjacent corner points covered by the unit region to be subjected to edgewise walking;
the contour of the working region is formed by connecting a plurality of contour segments; each of the contour segments corresponds to the two adjacent corner points;
when the each of the contour segments is expressed in the map according to a preset clock direction by the unit region to be subjected to edgewise walking where two corresponding adjacent corner points are located, a coordinate coverage range of each unit region to be subjected to edgewise walking in the working region and a sorting of each unit region to be subjected to edgewise walking in the preset clock direction are sequentially recorded in a memory of the robot; and
when each of the contour segments is expressed in the map by two corresponding adjacent corner points according to the preset clock direction, coordinates of every two adjacent corner points in the working region and the sorting of every two adjacent corner points in the preset clock direction are sequentially recorded in the memory of the robot.

7. The setting method according to claim 6, wherein during the process of setting the unit region to be subjected to edgewise walking in the working region, firstly marking a pre-selected corner point as a current corner point, and starting from the current corner point, selecting one closest corner point in the preset clock direction and marking the corner point as a next corner point, then setting the rectangular region where the two corner points are located as the unit region to be subjected to edgewise walking, recording the sorting and the coordinate coverage ranges of the unit region to be subjected to edgewise walking and the corresponding corner points in the preset clock direction, and marking the current corner point and the next corner point as the two adjacent corner points; and then updating the next corner point as the current corner point, and performing repetition in this way until corresponding unit regions to be subjected to edgewise walking are set at locations where all adjacent corner points are located, and obtaining the coordinate coverage ranges of all unit regions to be subjected to edgewise walking in the working region and the sorting in the preset clock direction.

8. The setting method according to claim 1, wherein searching for the corner points of the working region from the map by the robot comprises:
in the map, starting from a preset search starting point, obtaining the corner points in a neighborhood search mode by the robot, wherein the search starting point is a pixel point used for representing an obstacle,
wherein the corner point is an intersection point of a group of mutually perpendicular contour line segments in the map, the intersection point belongs to an endpoint of the contour line segment, and the contour line segment is marked by the robot in advance when performs traversal in the working region.

9. The setting method according to claim 8, wherein obtaining the corner points in the neighborhood search mode by the robot comprises: when only one pixel point for representing the obstacle is searched in the neighborhoods of the search starting point, setting the search starting point as the corner point, and marking the pixel point as a current candidate point; and performing a search in the neighborhoods of the current candidate point, in a case that there is no pixel point collinear with the current candidate point and the search starting point, marking the current candidate point as a corner point searched in the neighborhoods of the search starting point, and marking the search starting point and the current candidate point as the two adjacent corner points; and in a case that there is a pixel point collinear with the current candidate point and the search starting point, updating the current candidate point as a transition point, updating the pixel point as the current candidate point, then performing a search in the neighborhoods of the current candidate point, performing repetition in this way until there is no pixel point collinear with the current candidate point and the transition point, and marking the current candidate point as the corner point.

10. A method for controlling robot edgewise walking termination, comprising:
executing the map region contour-based setting method according to any of claims 1-4 by a robot to set a plurality of unit regions to be subjected to edgewise walking;
then, performing edgewise walking in a working region by the robot;
when the robot walks through all the unit regions to be subjected to edgewise walking, stopping perform edgewise walking by the robot ; and
when the robot repeatedly walks through a same batch of the unit regions to be subjected to edgewise walking, stopping perform edgewise walking by the robot, wherein the same batch of the unit regions to be subjected to edgewise walking are a preset number of the unit regions to be subjected to edgewise walking that are different from each other; and
the number of unit regions to be subjected to edgewise walking set by using the setting method is greater than the preset number.

11. The method for controlling the robot edgewise walking termination according to claim 10, wherein when the greater a size of at least one of the following objects is, the smaller the preset number is set to be: an obstacle in the working region, and a working forbidden region set by a virtual wall;
when the greater the size of at least one of the following objects is, the greater the preset number is set to be: the obstacle in the working region, and the working forbidden region set by the virtual wall; and
the greater an overlapping region between two unit regions to be subjected to edgewise walking is, the smaller the preset number is set to be.

12. The method for controlling the robot edgewise walking termination according to claim 10, wherein every time when the robot repeatedly walks through the same batch of the unit regions to be subjected to edgewise walking, the robot walks through each unit region to be subjected to edgewise walking according to a preset clock direction or an opposite direction of the preset clock direction;
during a current process of the robot walking through the same batch of the unit regions to be subjected to edgewise walking, the robot only walks through each of the unit regions to be subjected to edgewise walking in the same batch of the unit regions to be subjected to edgewise walking once,
wherein all the unit regions to be subjected to edgewise walking in the same batch of unit regions to be subjected to edgewise walking are set in the working region according to the preset clock direction.

13. The method for controlling the robot edgewise walking termination according to claim 10, wherein when an abscissa recorded by the robot in real time is greater than the minimum abscissa of a vertex of the unit region to be subjected to edgewise walking and less than the maximum abscissa of the vertex of the unit region to be subjected to edgewise walking, and an ordinate recorded by the robot in real time is greater than the minimum ordinate of the vertex of the unit region to be subjected to edgewise walking and less than the maximum ordinate of the vertex of the unit region to be subjected to edgewise walking, the robot enters the unit region to be subjected to edgewise walking, it is determined that an edgewise walking trajectory of the robot passes through the unit region to be subjected to edgewise walking and that the robot walks through the unit region to be subjected to edgewise walking,
wherein the unit region to be subjected to edgewise walking is a planar region in a map.

14. The method for controlling the robot edgewise walking termination according to claim 13, wherein after the robot enters the last unit region to be subjected to edgewise walking that has not been walked through in the preset clock direction, it is determined that the edgewise walking trajectory of the robot passes through all the unit regions to be subjected to edgewise walking, and then the robot stops walking along the edge,
wherein a sorting of the unit regions to be subjected to edgewise walking in the preset clock direction is obtained in advance, so as to conveniently determine a relative location relationship of one unit region to be subjected to edgewise walking in the preset clock direction.
